(19) Europäisches Patentamt
European Patent Office
Office européen des brevets

(11) Numéro de publication: 0 223 720
A1

# (12) DEMANDE DE BREVET EUROPEEN

(21) Numéro de dépôt: 86420250.2

(22) Date de dépôt: 14.10.86

(51) Int. Cl.⁴: **A 01 N 43/40**
A 01 N 43/76, A 01 N 47/38
//(A01N43/40,37:32),
(A01N43/76,43:40),(A01N47/38,
43:40)

(30) Priorité: 14.10.85 FR 8515373

(43) Date de publication de la demande:
27.05.87 Bulletin 87/22

(84) Etats contractants désignés:
AT BE CH DE ES FR GB GR IT LI LU NL SE

(71) Demandeur: RHONE-POULENC AGROCHIMIE
14-20, rue Pierre Baizet
F-69009 Lyon (FR)

(72) Inventeur: Merindol, Beatrice
4 Clos des coquilles
F-69340 Francheville le Haut (FR)

(74) Mandataire: Chrétien, François et al
RHONE-POULENC AGROCHIMIE BP 9163
F-69263 Lyon Cedex 09 (FR)

(54) **Composition fongicide à base d'un dichloro-3,5 phényl dicarboximide 1,2.**

(57) - Composition fongicide.
- Elle contient comme matière active un mélange d'un dichloro-3,5 phényl dicarboximide 1,2 et de pyroxyfur.
- Composition utilisable pour la protection des plantes.

EP 0 223 720 A1

**Description**

COMPOSITION FONGICIDE A BASE D'UN DICHLORO-3,5 PHENYL DICARBOXIMIDE 1,2

La présente invention concerne des compositions fongicides pour la protection des plantes contre les maladies fongiques ainsi qu'un procédé de traitement de ces plantes contre les maladies fongiques par application de deux matières actives associées, un dichloro-3,5 phényl dicarboximide-1,2 et le pyroxyfur.

Les dichloro-3,5 phényl dicarboximides-1,2 sont connus pour leurs propriétés fongicides notamment sur Botrytis et Sclerotinia. Comme représentants principaux de cette famille on peut citer l'iprodione, nom commun pour l'isopropylcarbamoyl-1 (dichloro-3,5 phényl), 3 hydantoïne, la vinchlozoline, nom commun pour la (dichloro-3,5 phényl)-3 méthyl-5 vinyl-5 oxazolidine-1,3 dione-2,4, la procymidone, nom commun pour la (dichloro-3.5 phényl)-3 diméthyl-1.2 cyclopropane dicarboximide-1,2 et plus récemment le chlozolinate, nom commun pour (dichloro-3,5 phényl)-3 méthyl-5 dioxo-2,4 oxazolidine-5 carboxylate d'éthyle.

Par ailleurs, le pyroxyfur, nom commun pour la chloro-2-(2-furanylmethoxy)-6-(trichlorométhyl)-4-pyridine est connue pour ses propriétés fongicides contre des champignons du sol, notamment certains Phytophthora.

Cependant, son action sur d'autres champignons importants comme Fusarium sp et certains Pythium n'est pas suffisante pour avoir une large application en traitement de semences.

La demanderesse a découvert de manière surprenante qu'on peut obtenir une bonne protection dans ce cas en associant le pyroxyfur avec une autre matière active fongicide, l'iprodione, pourtant connu comme ayant pratiquement une action incomplète sur les champignons du sol responsables des maladies des semences.

La présente invention a donc pour objet des compositions fongicides pour la protection des plantes contre les maladies fongiques caractérisées en ce qu'elles contiennent un mélange d'un (dichloro-3,5 phényl)-3 dicarboximide-1,2 (composé A) et de pyroxyfur. Bien que le rapport pondéral, dans ce mélange des deux matières actives citées puisse varier dans de larges limites, il sera généralement de 0,00005 à 10 parties de composé A par partie de pyroxyfur.

L'invention concerne également un procédé de traitement des plantes contre les maladies fongiques qui consiste à appliquer une association d'un (dichloro-3,5 phényl)-3 dicarboximide-1,2 (composé A) de formule :

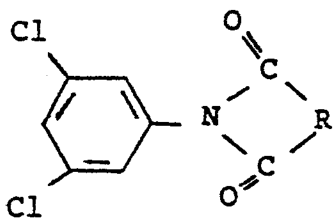

(A)

dans laquelle R est un radical

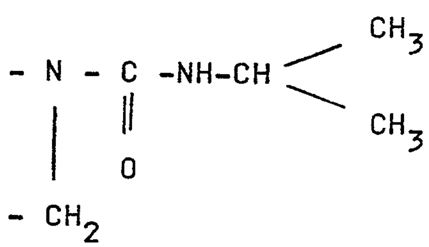

ou

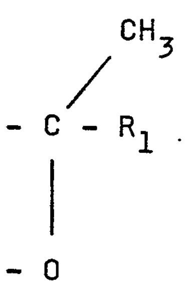

dans lequel $R_1$ est le radical vinyle, métoxyméthyle ou éthyloxycarbonyle, ou encore :

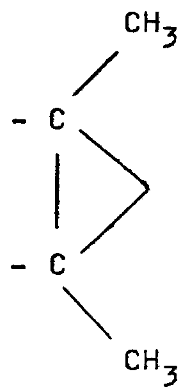

et de pyroxyfur. Cette application peut se faire de manière simultanée (sous forme de composition prête à l'emploi ou de mélange extemporé) ou successive.

Les exemples suivants illustrent les propriétés synergiques de l'association selon l'invention.

Exemple 1 - Test in vitro sur Fusarium roseum

Dans une série de boîtes de Pétri stérilisées à l'autoclave à 120° C, on introduit, en surfusion, un milieu nutritif PDA (DIFCO) contenant une infusion de 200 g de jus de pomme de terre, 20 g de bacto-dextrose, 15 g de bacto-agar et qsp 1 l d'eau, à raison de 20 ml par boîte.

Au cours du remplissage, on injecte dans le milieu en surfusion, une solution acétonique de la matière active (le Composé A, le pyroxyfur, seuls ou en mélange) pour obtenir la concentration désirée.

On prend comme témoins, des boîtes de Pétri analogues aux précédentes remplies comme indiqué ci-dessus, sauf que le milieu nutritif ne contient pas de matière active.

Au bout de 24 heures, chaque boîte est ensemencée par dépôt d'un fragment cylindrique de mycélium provenant d'une culture précédente du même champignon.

Les boîtes sont conservées 5 jours à 22° C + 2 et on compare la croissance du champignon dans les boîtes contenant la ou les matières actives à tester, à celle du même champignon dans les boîtes témoins.

Dans ces conditions, le pourcentage d'inhibition se calcule selon la formule suivante :

$$I = \frac{T - TT}{T - d} \times 100$$

dans laquelle :

I est le pourcentage d'inhibition,

T est le diamètre moyen, en mm, du développement mycélien dans la boîte témoin,

TT est le diamètre moyen, en mm, du développement mycélien dans la boîte traitée, et

d est le diamètre du fragment mycélien déposé au début de l'essai.

Dans ces conditions, on obtient les résultats consignés dans le tableau suivant, sous forme des pourcentages d'inhibition réel $I_r$, en comparaison avec des pourcentages d'inhibition théorique attendus $I_c$ des mélanges des deux matières actives constituant le mélange, pourcentages obtenus à partir des pourcentages d'inhibition $I_A$ et $I_B$ de chacune des matières actives constitutives du mélange selon la formule de Limpel

$$I_c = I_A + I_B - \frac{I_A\ I_B}{100}$$

Pour chaque mélange les résultats sont présentés par une case se présentant ainsi :

| | |
|---|---|
| $I_r$ | / |
| / | $I_c$ |

TABLEAU I

| Dose de matière active en mg/l | | PYROXYFUR 100 | PYROXYFUR 30 | PYROXYFUR 10 | 0 |
|---|---|---|---|---|---|
| IPRODIONE | 30 | 61 / 51 | 52 / 42 | 44 / 41 | 35 |
| | 10 | 49 / 33 | 24 / 22 | - | 13 |
| | 0 | 23 | 10 | 8 | témoin non traité |

Exemple 2 - Test in vitro sur Phoma betae

En opérant comme à l'exemple précédent mais sur le champignon ci-dessus, on obtient les résultats suivants consignés dans le tableau II.

TABLEAU II

| Dose de matière active en mg/l | | PYROXYFUR 2000 | PYROXYFUR 1000 | PYROXYFUR 300 | PYROXYFUR 100 | PYROXYFUR 30 | 0 |
|---|---|---|---|---|---|---|---|
| IPRODIONE | 0,1 | 78 / 77 | 69 / 59 | 60 / 50 | 68 / 49 | 50 / 48 | 21 |
| | 0 | 73 | 49 | 37 | 36 | 35 | témoin non traité |

Ce tableau montre clairement, pour un champignon différent de celui de l'exemple 1, pour une large gamme du rapport pondéral

$$\frac{\text{Iprodione}}{\text{Pyroxyfur}},$$

, les propriétés synergiques du mélange selon l'invention.

Exemple 3 : Test in vivo sur Sclerotinium

Des bulbes d'ail (variété Termidrome) sont humidifiés par pulvérisation d'eau distillée puis, immédiatement après, roulés dans une poudre de traitement fongicide de manière à apporter respectivement :

- 75 g/quintal d'iprodione
- 75 et 225 g/quintal d'iprodione
- un mélange de 75 g/quintal d'iprodione et 75 g/quintal de pyroxyfur,
- un mélange de 75 g/quintal d'iprodione et 225 g/quintal de pyroxyfur.

Les bulbes traités sont immédiatement plantés, dans des terrines (autour du 15 Octobre). Au 20 Juin suivant on effectue le relevé en observant le nombre de plants sains diminué du nombre de plants sains de terrines témoins,qui, rapporté à ce dernier et exprimé en pourcentage, donne le coefficient d'efficacité ou de

protection d'Abbott K.

Dans ces conditions, on obtient les résultats rassemblés dans le tableau suivant :

| matière active | dose m. a. g/q | | % plants sains | K % |
|---|---|---|---|---|
| sans (témoins) | | - | 26,8 | - |
| Iprodione | 75 | | 28,1 | 1 |
| Pyroxyfur | | 75 | 41,6 | 21 |
| Iprodione + Pyroxyfur | 75 | 75 | 47,1 | 27 |
| Iprodione + Pyroxyfur | 75 | 225 | 84,3 | 78 |

Cet exemple montre clairement la synergie d'efficacité exercée sur Sclerotinium in vivo, par les mélanges selon l'invention pour des rapports respectifs de matière active iprodione/pyroxyfur de 1/1 et 1/3.

La présente invention a également pour objet les compositions antifongiques contenant comme matière active une association antifongique décrite précédemment, ainsi qu'un support inerte et/ou un agent tensioactif, et éventuellement une ou plusieurs autres matières actives antifongiques appropriées. Généralement ces compositions comprennent de 0,001 à 95 % en poids de l'association de matières actives et de 0,1 à 20 % en poids d'agent tensioactif.

Elles sont préparées selon un procédé également compris dans le cadre de l'invention qui consiste à mélanger les divers ingrédients puis à les transformer en un mélange utilisable en agriculture.

Par le terme "support", dans le présent exposé, on désigne une matière organique ou minérale, naturelle ou synthétique, avec laquelle l'association de matières actives est mélangée pour faciliter son application sur la plante, sur des graines ou sur le sol. Ce support est donc généralement inerte et il doit être acceptable en agriculture, notamment pour la plante traitée. Le support peut être solide (argiles, silicates naturels ou synthétiques, silice, craies, résines, cires, engrais solides, etc...) ou liquide (eau, alcools, cétones, fractions de pétrole, hydrocarbures aromatiques ou paraffiniques, hydrocarbures chlorés, gaz liquéfiés, etc..).

L'agent tensioactif peut être un agent émulsionnant, dispersant ou mouillant de type ionique ou non ionique. On peut citer par exemple des sels d'acides polyacryliques ; des sels d'acides lignosulfoniques ; des sels d'acides phénolsulfoniques ou naphtalènesulfoniques ; des polycondensats d'oxyde d'éthylène sur des alcools gras ou sur des acides gras ou sur des amines grasses ou sur des phénols substitués (notamment des alkylphénols ou des arylphénols ou des alkylarylphénols) ; des sels d'esters d'acides sulfosucciniques ; des dérivés de la taurine (notamment des alkyltaurates) ; des esters phosphoriques d'alcools ou de phénols polyoxyéthylés. La présence d'au moins un agent tensioactif est généralement indispensable surtout lorsque le support inerte n'est pas soluble dans l'eau, et qu l'agent vecteur de l'application est l'eau.

Les compositions utilisées dans l'invention peuvent être sous des formes diverses, solides ou liquides.

Comme formes de compositions solides, on peut citer les poudres pour poudrage ou dispersion (à teneur en matières actives pouvant aller jusqu'à 100 %).

Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes et les granulés dispersibles dans l'eau.

Les concentrés émulsionnables ou solubles comprennent le plus souvent 10 à 80 % de l'association de matières actives, les émulsions ou solutions prêtes à l'application contenant, quant à elles, 0,001 à 20 % de l'association des matières actives. En plus de l'association de matières actives du solvant, les concentrés émulsionnables peuvent contenir un co-solvant et, quand c'est nécessaire, 2 à 20 % d'additifs appropriés, comme des stabilisants, des agents tensioactifs, des agents de pénétration, des inhibiteurs de corrosion, des colorants, des adhésifs.

A partir de ces concentrés, on peut obtenir par dilution avec de l'eau des émulsions de toute concentration désirée, qui conviennent particulièrement à l'application sur les feuilles.

Les suspensions concentrées, également applicables en pulvérisation, sont préparées de manière à obtenir un produit fluide stable ne se déposant pas et elles contiennent habituellement de 10 à 75 % de l'association de matières actives, de 0,5 à 15 % d'agents tensioactifs, de 0,1 à 10 % d'agents thixotropes, de 0 à 10 % d'additifs appropriés, comme des anti-mousses, des inhibiteurs de corrosion, des stabilisants, des agents de pénétration des biocides et des adhésifs et, comme support, de l'eau ou un liquide organique dans lequel la matière active est peu ou pas soluble : certaines matières solides organiques ou des sels minéraux peuvent

être dissous dans le support pour aider à empêcher la sédimentation ou comme antigels pour l'eau.

Les poudres mouillables (ou poudre à pulvériser) sont habituellement préparées de manière qu'elles contiennent 20 à 95 % de l'association de matières actives, et elles contiennent habituellement, en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des agents de pénétration, des adhésifs, ou des agents antimottants, colorants, etc...

A titre d'exemple voici la composition de plusieurs poudres mouillables selon l'invention (exemples 4 à 8) :

Poudre mouillable à 10 %
- matière active : association : Iprodione ou procymidone/pyroxyfur dans un rapport pondéral 0,33 : 1 10 %
- agent mouillant : alcool synthétique oxo en $C_{13}$, de type ramifié, éthoxylé par 8 à 10 oxide d'éthylène 0,75 %
- agent dispersant : lignosulfonate de calcium neutre 12 %
- charge inerte : carbonate de calcium q.s.p. 100 %

Poudre mouillable à 50 %
- matière active : association : Iprodione/pyroxyfur dans un rapport pondéral 1 : 1 50 %
- agent mouillant : alcool gras polyéthoxylé 2,5 %
- agent dispersant : polyarylphénol polyéthoxylé 5 %
- support inerte : craie 42,5 %

Poudre mouillable à 75 %
- matière active : association : Iprodione ou vinchlozoline/pyroxyfur dans un rapport pondéral 0,0001 : 1 75 %
- agent mouillant 1,5 %
- agent dispersant 8 %
- charge inerte : carbonate de calcium q.s.p. 100 %

Poudre mouillable à 90 %
- matière active : association : Iprodione ou chlozolinate/pyroxyfur dans un rapport pondéral 0,001 : 1 90 %
- agent mouillant : alcool gras polyéthoxylé 4 %
- agent dispersant polyarylphénol polyéthoxylé 6 %

Pour obtenir ces poudres mouillables ou poudres à pulvériser, on mélange intimement les matières actives dans des mélangeurs appropriés avec les substances additionnelles et on broie avec des moulins ou autres broyeurs appropriés. On obtient par là des poudres dont la mouillabilité et la mise en suspension sont avantageuses ; on peut les mettre en suspension avec de l'eau à toute concentration désirée et cette suspension est utilisable très avantageusement en particulier pour l'application sur les feuilles des végétaux.

Selon un autre mode de réalisation de l'invention, les compositions selon l'invention peuvent être constituées pour partie ou en totalité par des granulés dispersibles dans l'eau. Ces granulés ont une dimension de particules généralement comprise entre environ 150 et 2000 microns et de préférence entre 300 et 1500 microns.

Leur teneur en matière active est généralement comprise entre environ 1 % et 90 % et de préférence entre 25 % et 90 %.

Le reste du granulé est essentiellement composé d'une charge solide et éventuellement d'adjuvants tensio-actifs conférant au granulé des propriétés de dispersibilité dans l'eau. Ces granulés peuvent être essentiellement de deux types distincts selon que la charge retenue est soluble ou non dans l'eau. Lorsque la charge est hydrosoluble, elle peut être minérale et de préférence organique. On a obtenu d'excellents résultats avec l'urée. Dans le cas d'une charge insoluble, celle-ci est de préférence minérale, comme par exemple, le kaolin ou la bentonite. Elle est alors accompagnée d'agents tensio-actifs (à raison de 2 à 20 % en poids du granulé), dont plus de la moitié est avantageusement constituée par au moins un agent dispersant, essentiellement anionique, tel qu'un poly(naphtalène sulfonate alcalin ou alcalino terreux) ou un lignosulfonate alcalin ou alcalino-terreux, le reste étant constitué par des mouillants non ioniques ou anioniques tel qu'un alcoyl-naphtalène sulfonate alcalin ou alcalino-terreux.

Par ailleurs, bien que cela ne soit pas indispensable, on peut ajouter d'autres adjuvants tels que des agents anti-mousse.

Le granulé peut être préparé par mélange des ingrédients nécessaires puis granulation selon plusieurs techniques en soi connues (drageoir, lit fluide, atomiseur, extrusion, etc..). On termine généralement par un concassage suivi d'un tamisage à la dimension de particule choisie dans les limites mentionnées ci-dessus.

Selon un mode de réalisation de l'invention chacune des deux matières actives peut être formulée sous la forme de granulés et ces granulés mélangés dans les proportions appropriées, de manière à obtenir des compositions appropriées.

Les composés de formule A et le pyroxyfur peuvent encore être utilisés sous forme de poudres pour poudrage ; on peut aussi utiliser une composition comprenant 50 g de matière active et 950 g de talc ; on peut utiliser une composition comprenant 20 g de matière active, 10 g de silice finement divisée et 970 g de talc ; on mélange et broie ces constituants et on applique le mélange par poudrage.

Les compositions selon l'invention sont habituellement préparées dans une première opération par

mélange des divers ingrédients, de manière à obtenir une composition concentrée que l'on dilue ensuite par de l'eau pour obtenir la concentration voulue de chacune des matières actives. Ces compositions peuvent être préparées aussi par mélange extemporané, juste avant emploi d'une composition antifongique à base de composé A avec une composition à base de pyroxyfur. Ces divers modes de mise en oeuvre des compositions selon l'invention sont également compris dans le cadre de l'invention.

La présente invention a enfin pour objet un procédé de la lutte contre les maladies fongiques des plantes tout particulièrement les graminées et légumineuses.

Ce procédé consiste à appliquer sur lesdites plantes, en mélange ou séparément, une quantité efficace, sous l'aspect antifongique, d'une association de matières actives décrite précédemment. Par "quantité efficace" on entend une quantité suffisante pour contrôler de façon satisfaisante la maladie, sans entraîner de dégradation pour la plante traitée.

La dose de chacune des matières actives à utiliser dans ces traitements peut varier dans de grandes limites selon le type de culture, et l'effet recherché.

Avantageusement :

- le composé A est appliqué à raison de 0,01 à 500 g/ha,
- le pyroxyfur est appliqué à raison de 10 à 2000 g/ha ,

Ces traitements sont habituellement effectués au moyen de bouillies diluées, appliquées sur les cultures à raison de 800 à 1200 l/ha et contenant l'association de matières actives à une concentration telle qu'on obtienne les doses/ha désirées. Ils peuvent cependant être effectués aussi en utilisant des bouillies plus concentrées, ou plus diluées, sans sortir du cadre de l'invention.

Dans le cas d'une application simultanée des deux matières actives, il est avantageux d'utiliser des compositions prêtes à l'emploi contenant l'association des matières actives décrites plus haut. On peut également mettre en oeuvre le procédé de l'invention en utilisant des compositions contenant chacune des matières actives à associer et en mélangeant ces compositions de façon extemporanée, juste avant application sur les plantes.

On peut enfin mettre en oeuvre le procédé selon l'invention en traitant les cultures à protéger successivement par l'une puis par l'autre des deux matières actives de manière à former in situ sur la plante l'association de matières actives selon l'invention. On comprendra que ces divers modes de mise en oeuvre de l'invention sont également compris dans le cadre de la présente demande.

Le procédé de traitement selon l'invention convient tout particulièrement pour la protection des cultures de céréales, riz, maïs, ail, contre les maladies fongiques de ces cultures telles que Fusarium sp., Phoma sp ou Sclerotinium sp.

**Revendications**

1) Composition fongicide pour la protection des plantes contre les maladies fongiques caractérisée en ce qu'elle contient comme matière active au moins un mélange d'un dichloro-3,5 phényl dicarboximide-1,2 (composé A) de formule :

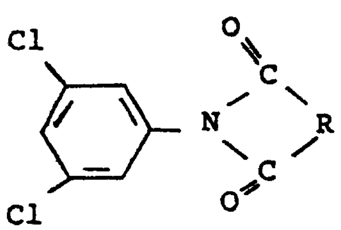

(A)

dans laquelle R est un radical

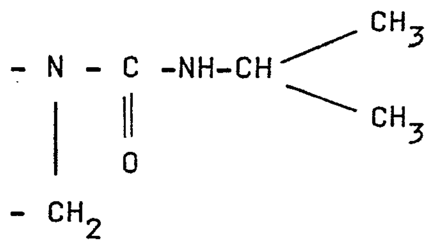

ou

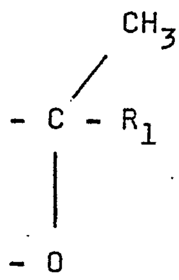

dans lequel $R_1$ est le radical vinyle, métoxyméthyle ou éthyloxycarbonyle, ou encore :

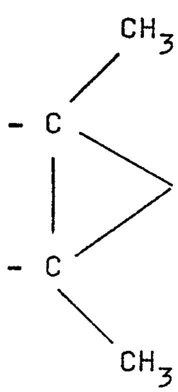

et de pyroxyfur.

2) Composition fongicide selon la revendication 1 caractérisée en ce que les deux matières actives sont dans un rapport pondéral compris entre 0,0005 à 10 parties de composé A par partie de pyroxyfur.

3) Composition fongicide selon l'une des revendications 1 et 2, caractérisée en ce qu'elle est sous forme concentrée prête à l'emploi.

4) Composition fongicide selon l'une des revendications 1 et 2, caractérisée en ce qu'elle est sous forme d'un mélange extemporané.

5) Composition fongicide selon l'une des revendications 1 à 4, caractérisée en ce que le dichloro-3,5 phényl-3 dicarboximide-1,2 est l'iprodione.

6) Composition fongicide selon l'une des revendications 1 à 4, caractérisée en ce que le (dichloro-3,5 phényl)-3 dicarboximide-1,2 est la procymidone.

7) Composition fongicide selon l'une des revendications 1 à 4, caractérisée en ce que le (dichloro-3,5 phényl)-3 dicarboximide-1,2 est la vinchlozoline.

8) Composition fongicide selon l'une des revendications 1 à 4, caractérisée en ce que le (dichloro-3,5 phényl)-3 dicarboximide-1,2 est le chlozolinate.

9) Procédé de protection des plantes contre les maladies fongiques caractérisé en ce qu'on applique une association d'un (dichloro-3,5 phényl)-3 dicarboximide-1,2 (composé A) de formule :

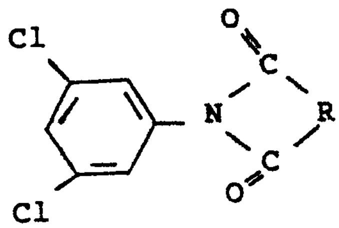

(A)

dans laquelle R est un radical

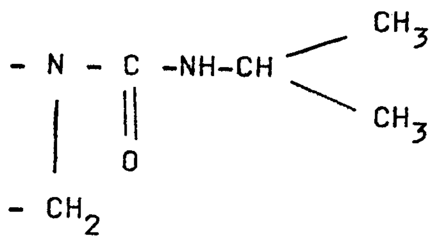

ou

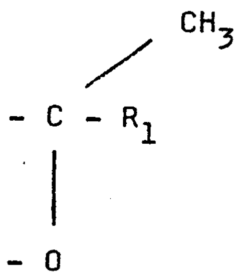

dans lequel $R_1$ est le radical vinyle, métoxyméthyle ou éthyloxycarbonyle, ou encore:

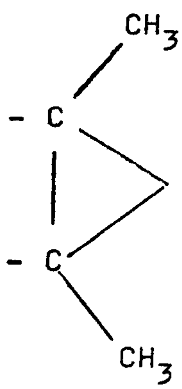

et de pyroxyfur.

10) Procédé selon la revendication 9 caractérisé en ce que les matières actives sont appliquées simultanément sous forme d'une composition selon les revendications 1 à 8.

11) Procédé selon la revendication 5 caractérisé en ce que les matières actives sont appliquées successivement.

12) Procédé selon l'une des revendications 10 et 11 caractérisé en ce que le (dichloro-3,5 phényl)-3 dicarboximide-1,2 est l'iprodione.

Office européen des brevets

# RAPPORT DE RECHERCHE EUROPEENNE

Numero de la demande

EP 86 42 0250

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | US-A-4 143 144 (H.K. TOBOL et al.)<br>* Revendications 19,35 *<br>----- | | A 01 N 43/40<br>A 01 N 43/76<br>A 01 N 47/38 //<br>(A 01 N 43/40<br>A 01 N 37:32 )<br>(A 01 N 43/76<br>A 01 N 43:40 )<br>(A 01 N 47/38<br>A 01 N 43:40 ) |
| | | | DOMAINES TECHNIQUES RECHERCHES (Int. Cl.4) |
| | | | A 01 N |

Le présent rapport de recherche a été établi pour toutes les revendications

| Lieu de la recherche | Date d'achèvement de la recherche | Examinateur |
|---|---|---|
| LA HAYE | 28-01-1987 | DECORTE D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82